# EUROPEAN PATENT SPECIFICATION

(11) **EP 3 953 607 B1**
(45) Date of publication and mention of the grant of the patent: **23.07.2025**
(21) Application number: 20721116.0
(22) Date of filing: 02.04.2020
(51) Int. Cl.: F16F 15/067

(54) **DAMPING DEVICE FOR HIGH ENERGY IMPACTS**
DÄMPFUNGSVORRICHTUNG FÜR ENERGIEREICHE STÖSSE
DISPOSITIF D'AMORTISSEMENT POUR IMPACTS À HAUTE ÉNERGIE

(30) Priority: 09.04.2019 IT 201900005464
(43) Date of publication of application: 16.02.2022
(73) Proprietor: Mascali, Alfio, 95045 Misterbianco (CT) (IT); Libero, Elisabetta, 95045 Misterbianco (CT) (IT); Mascali, Silvio, 50013 Campi Bisenzio (FI) (IT); Mascali, Francesco, 50013 Campi Bisenzio (FI) (IT)
(72) Inventor: MASCALI, Alfio, 95045 Misterbianco (CT) (IT); MASCALI, Silvio, 50013 Campi Bisenzio (FI) (IT); MASCALI, Francesco, 50013 Campi Bisenzio (FI) (IT)
(74) Representative: Giuliano, Natalia
(86) International application number: PCT/IB2020/053132
(87) International publication number: WO 2020/208482

(56) References cited:
- EP-A2- 1 548 319
- EP-B1- 1 548 319
- DE-U- 1 629 392
- GB-A- 1 111 993
- JP-U- S60 102 541
- SU-A1- 1 462 051

## Description

The present invention relates to a damping device for high energy impacts.

In particular, the present invention relates to a damping device for high energy impacts, of the type able to be anchored to structures to protect from possible impacts and comprising mechanical components having elastic properties and high resistance with respect to possible deformations of their structure.

As is well known, the current damping devices for high energy impacts are effective means, in their construction variants, to reduce the chance of damages in sectors involving the movement of huge weights, such as logistics or construction.

Several damping devices for high energy impacts are currently known.

A first known technical solution is described by the patent application EP1548319 whose subject is a vibration isolating damper, of the type used in industrial machinery generating oscillating movements or vibrations, as a special support to eliminate or reduce said effects, and in construction for the installation of floating concrete floors and adjustable beds, reducing the acoustic effects and vibrations that may be generated. The damper comprises a rubber silent block or various springs on a metal base along with a lateral stabilizer formed by tabs covered with an elastic element, and a base of the same elastic material, disposed with height adjustment means. The present invention offers the principal advantages of providing greater stability and acoustic isolation, preventing the transmission of vibrations that may affect negatively on the machines, in addition to providing increased adaptability to the floor.

Still, the patent application DE1629392 describes a plate with rubber springs or the like mounted on parallel rows.

The patent application JPS60102541U, instead, discloses a base suitable for preventing the collapse of a device or the like which can fail due to vibrations and movements, and more particularly a seismic isolation support of the device during an earthquake.

A further known technical solution is described by the patent application SU1462051A1 that discloses a vibration isolator device.

The patent application GB1111993A, in addition, describes mechanical vibration dampers having upper and lower portions with springs interposed between said portions. The same portions include flanges facing, respectively inside in first one, and outside in the second one, and different sizes so as to facilitate the coupling of the two portions.

Still, the patent application RU2651340C1 describes a device for cushioning the impacts between railway wagons that absorbs energy and that includes two sealing bushings, which provide the direction of an arm and located on one side of a piston. The internal sealing bush divides a chamber inside a closed cylinder in a working chamber axially limited by an internal surface, and in a lubricant chamber axially limited by the internal surface of the external sealing bush. The working chamber has a flow zone in which the internal diameter of the cylinder is large and positioned next to the internal sealing bush, and a compression zone in which the internal diameter cylinder provides a sliding coupling with respect to the piston surface corresponding to its external diameter.

Finally, the patent application TWM555427U, describes an anti-vibration platform acting on three directions and comprising a first plate, one or more sets of linear translation mechanisms along the 'x' direction comprising sliding guides, a second plate arranged on the first, one or more linear sliding mechanisms along the 'y' direction on the second plate, which includes a second linear sliding guide, staggered vertically with respect to the first guide. The platform has a locking point consisting of a conical hole made in the first plate, with a locking element represented by a cylinder, so that when the second plate slides horizontally with respect to the first, the lower end of the cylinder is released along the 'y' direction. The platform also includes shock-absorbing elements in the form of coil springs.

Other known solutions characterizing the damping devices for high energy impacts available in the current state of the art include platforms designed to absorb impact damages including pneumatic modules or buffers made of rubber.

However, the damping devices for high energy impacts currently known suffer from limitations related to poor efficiency, for example in the presence of a tangential component of the impact force vector generated by the direction of said force not perpendicular to the impact surface, and to the risk that the same damping devices incur structural deformations or even the breakage of their components, as well as of the structures to which they are anchored.

The purpose of the present invention is to provide a damping device for high energy impacts that allows to carry out operations for handling loads having huge weights, avoiding the risk of damaging the structures to which said damping device is attached and without undergoing deformation or structural breakage, thus having characteristics so as overcome the limitations that still affect the current damping devices for high energy impacts, with reference to the known technique.

According to the present invention, a damping device for high energy impacts is provided, as defined in claim 1.

For a better understanding of the present invention, a preferred embodiment is now described, purely by way of nonlimiting example, with reference to the attached drawings, in which:
- figure 1 shows two overall views, sectional and perspective, respectively, of the damping device for high energy impacts, according to the invention;
- figure 2 shows a further overall perspective view of the damping device for high energy impacts, according to the invention;

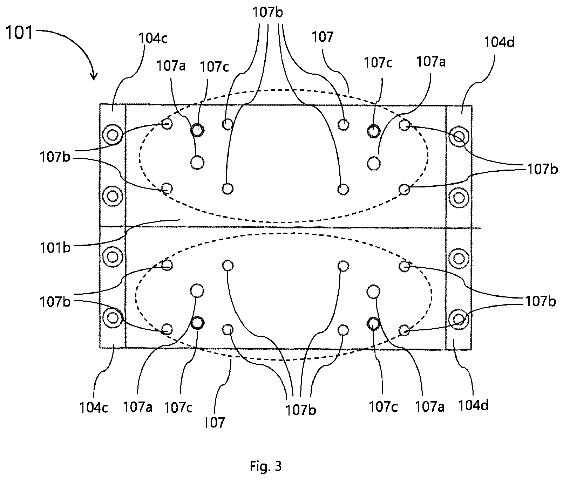

- figure 3 shows a plan view of a first component of the damping device for high energy impacts, according to the invention;
- figure 4 shows a first plan view of a second component of the damping device for high energy impacts, according to the invention;

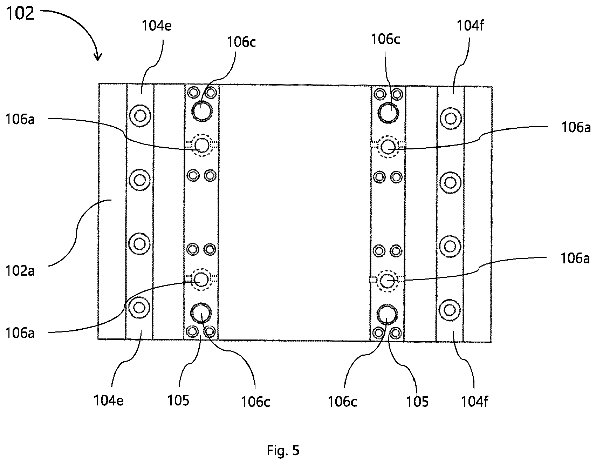

- figure 5 shows a second plan view of the second component of the damping device for high energy impacts, according to the invention;

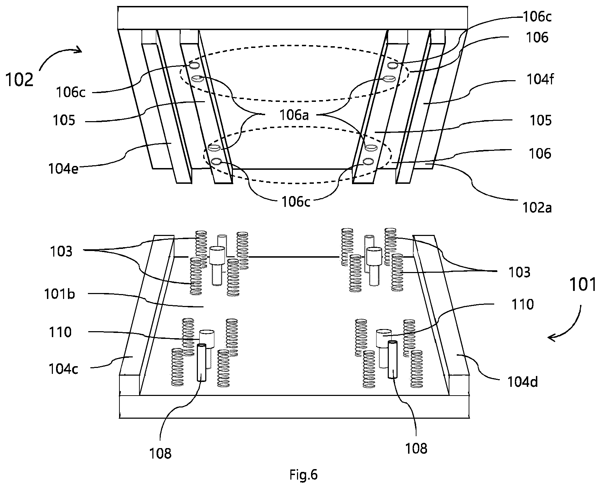

- figure 6 shows an exploded view of two components of the damping device for high energy impacts, according to the invention;
- figures 7a and 7b shows perspective views of two fixing components of the damping device for high energy impacts, according to the invention;
- figures 8a, 8b, 8c and 8d shows two different plan views, a sectional view and a perspective view, respectively, of a component of the damping device for high energy impacts, according to the invention;
- figures 9a and 9b show a sectional view and a perspective view, respectively, of the damping device for high energy impacts enclosed into a boxing component, according to the invention.

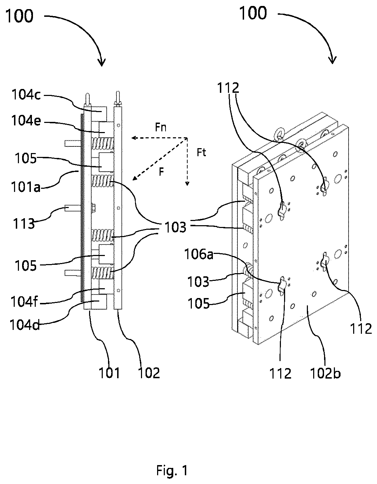

With reference to these figures and, in particular, to figure 1, a damping device 100 for high energy impacts is shown, according to the invention.

In particular, the damping device for high energy impacts comprises:
- a first metallic plate 101 having a first lower plane surface 101a able to be fixed to a structure to protect from high-energy impacts, and a first upper plane surface 101b;
- a second metallic plate 102 overlapped and fastened to said first metallic plate 101, having a second lower plane surface 102a and a second upper plane surface 102b;
- a plurality of springs 103 having a spiral profile placed between the first metallic plate 101 and the second metallic plate 102;
- a plurality of reinforcement bars 104 placed between the first metallic plate 101 and the second metallic plate 102, extending along a part or along the overall length of said first metallic plate 101 and second metallic plate 102 and configured to oppose against shear stresses acting on the second upper plane surface 102b of the second metallic plate 102.

According to an aspect of the invention, the first metallic plate 101, or base plate, and the second metallic plate 102, or external plate, have a thickness comprised between 15 mm and 30 mm, and preferably equal to 20 mmm.

The first metallic plate 101 comprises a first lower plane surface 101a which can be fixed to a structure to be protected from high energy impacts, and a first upper plane surface 101b. Likewise, the second metallic plate 102 comprises a second lower plane surface 102a, and a second upper plane surface 102b.

According to an aspect of the invention, the plurality of reinforcement bars 104, each of them referable as a parallelepiped, consists of at least a first reinforcement bar 104c and of a second reinforcement bar 104d parallel to each other and fixed to the first upper plane surface 101b of the first metallic plate 101, and of at least a third reinforcement bar 104e and of a fourth reinforcement bar 104f parallel to each other and fixed to the second lower plane surface 102a of the second metallic plate 102.

According to another aspect of the invention, the first reinforcement bar 104c and the third reinforcement bar 104e are partially in contact with each other in correspondence of respective side surfaces, while the second reinforcement bar 104d and the fourth reinforcement bar 104f are partially in contact with each other at respective side surfaces and are configured to oppose against shear stresses acting along the second upper plane surface 102b of the second metallic plate 102.

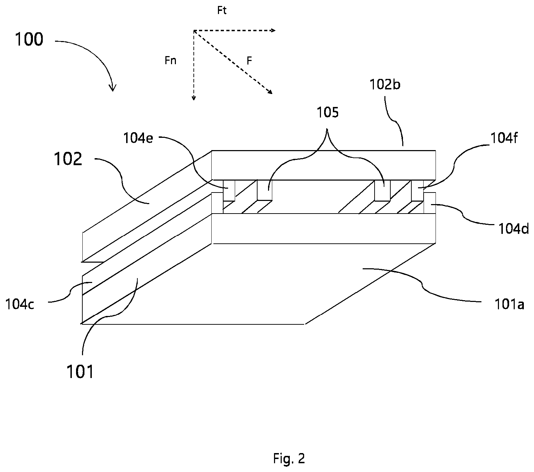

All the aforementioned reinforcement bars 104 are configured to oppose against shear stresses 'Ft', tangential components of impact forces 'F' shown in figure 2, acting along the second upper plane surface 102b of the second metallic plate 102.

Advantageously according to the invention, the plurality of reinforcement bars 104 allows to avoid relative movements between the first metallic plate 101 and the second metallic plate 102, in particular due to forces 'F' generated by impacts on the damping device 100 not perpendicular to the second upper plane surface 102b of the second metallic plate 102.

According to an aspect of the invention, the damping device 100 comprises a plurality of auxiliary bars 105, each of them referable as a parallelepiped, parallel to each other and parallel to the third reinforcement bar 104e and to the fourth reinforcement bar 104f.

According to an aspect of the invention, the auxiliary bars 105 are fixed to the second lower plane surface 102a of the second metallic plate 102 and comprise over surfaces parallel to the second lower plane surface 102a a plurality of first seats 106.

The auxiliary bars 105, as said, are fixed to the second metallic plate 102 in parallel to the third reinforcement bar 104e and to the fourth reinforcement bar 104f.

Advantageously according to the invention, the plurality of auxiliary bars 105 and the plurality of first seats 106 obtained therein, ensure an effective positioning of mechanical fastening and fixing components between the first metallic plate 101 and the second metallic plate 102 while preserving, in use, the strength and structural rigidity of the damping device 100.

According to an aspect of the invention, the damping device 100 comprises a plurality of threaded holes 107 obtained on the first upper plane surface 101b of the first metallic plate 101 and extending for the entire thickness of said first metallic plate 101.

According to another aspect of the invention, the damping device 100 comprises a plurality of metallic cylinder-shaped support elements, each of them being fastened to the first metallic plate 101 at a threaded end, by means of a corresponding threaded hole 107b included in the plurality of threaded holes 107. Each spring comprised in the plurality of springs 103 is arranged so as to enclose in its internal section a corresponding metallic cylinder-shaped support element which is adapted to support the spring and to keep it in axis.

Advantageously according to the invention, the plurality of springs 103, having high compressive strength, allows to absorb part of the energy transferred during a possible impact between huge weights, for example a truck in motion during the loading and unloading operations of goods, or a forklift in operation, and the damping device 100 fixed to a structure to be protected, such as a pillar or a wall. In particular, the damping device 100 allows to cushion the normal component 'Fn', better shown in figures 1 and 2, of the force 'F' acting over the second upper plane surface 102b of the second metallic plate 102.

In use, therefore, advantageously, the reaction force that follows the impact, coming from the plurality of springs 103, allows to preserve both the integrity of the damping device 100 following the impact, and the integrity of the support structures, for example pylons or walls, to which the damping device 100 is fixed.

According to an aspect of the invention, the damping device 100 comprises a plurality of cylinder-shaped sealing shafts 108, with each of them fastened at a first threaded end to the first metallic plate 101 by means of a corresponding threaded hole 107c comprised in the plurality of threaded holes 107 and configured to be housed at a second end, opposite to the first threaded end, into a corresponding seat 106c comprised in the plurality of first seats 106.

In use, therefore, with the first metallic plate 101 overlapped to the second metallic plate 102, the threaded holes 107c placed on the first upper plane surface 101b of the first metallic plate 101, are in axis with the seats 106c placed on the auxiliary bars 105.

Advantageously according to the invention, the plurality of sealing shafts 108 allows to maintain the mutual position between the first metallic plate 101 and the second metallic plate 102 and to avoid reciprocal movements in the presence of shear stresses 'Ft', tangential components of the impact forces 'F', when said shear stresses 'Ft' are parallel to the axis of the plurality of reinforcement bars 104 and of the plurality of auxiliary bars 105, e.g. in the case of trucks moving on slight slopes impacting on the damping device 100.

According to an aspect of the invention, the first metallic plate 101 and the second metallic plate 102 are constrained to each other by a plurality of fixing means, for example fixing bolts 110. Each fixing bolt 110 is fastened at a first threaded end to the first metallic plate 101 by means of a corresponding threaded hole 107a included in the plurality of threaded holes 107 and is configured to be housed at a second end, opposite to the first threaded end, into a corresponding seat 106a comprised in the plurality of first seats 106.

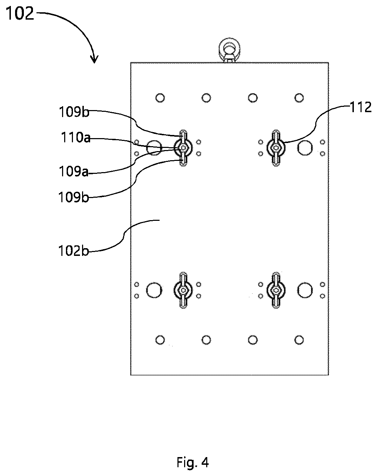

According to an aspect of the invention, the second metallic plate 102 comprises a plurality of second seats 112, each of said second seats 112 having two opposite linear grooves, shown in the figures 1 and 4, and being able to be placed in axis with a corresponding seat 106a and to house, together with said corresponding seat 106a, a corresponding fixing bolt 110.

During the assembly of the damping device 100, the positioning in place of the aforementioned fixing bolts 110 is one of the last operations in the phase of overlapping and fixing the second metallic plate 102 to the first metallic plate 101, with said positioning carried out by acting externally to the second metallic plate 102 by screwing each fixing bolt 110 into the corresponding threaded hole 107a, acting manually from the outside of the second metallic plate 102 through the corresponding second seat 112.

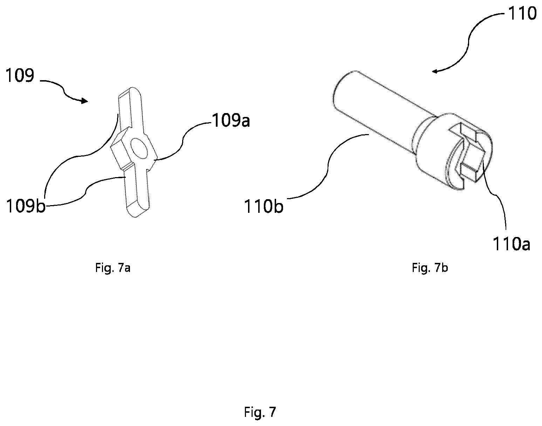

In particular, according to an aspect of the invention and as shown in figure 7b, each fixing bolt 110 comprised in the plurality of fixing bolts 110 consists of a cylinder-shaped body 110b having a first threaded end able to be screwed and housed into the corresponding threaded hole 106a, and of a hollow cylinder-shaped head 110a having a section greater than the section of the cylinder-shaped body 110b. The hollow cylinder-shaped head 110a comprises two grooves placed at opposite sides.

In use, to avoid the effects related to friction, or deriving from potential movements and vibrations of the support to which the damping device 100 is fixed, a blocking element 109 is provided, for example a metal key, better visible in figure 7a, able to avoid the unscrewing of each fixing bolt 110 included in the plurality of fixing bolts 110.

According to an aspect of the invention, each fixing bolt 110 is provided with said blocking element 109 consisting of a central element 109a having a central hole and two opposite linear side protrusions 109b. During the assembly of the damping device 100, the central element 109a is able to be housed into the hollow cylinder-shaped head 110a of the fixing bolt 110, and the opposite linear side protrusions 109b are able to be housed extending along the grooves of the hollow cylinder-shaped head 110a and into the linear grooves of a corresponding seat comprised in the plurality of second seats 112, implementing an effective mechanical matching, as better shown in the figures 4 and 7.

In use, therefore, with the second metallic plate 102 overlapped to the first metallic plate 101, the threaded holes 107a placed on the first upper plane surface 101b are in axis with the seats 106a and with the second seats 112.

With both each fixing bolt 110 screwed into the corresponding threaded hole 107a, and each blocking element 109 placed over its corresponding fixing bolt 110 through the second seats 112, the last assembling operation is screwing, inside a further seat placed into the hollow cylinder-shaped head 110a and into the central hole of the central element 109a, a further bolt, having a section smaller than the section of the fixing bolt 110 and not shown in the figures, to fasten together each fixing bolt 110 to its corresponding blocking element 109.

Advantageously according to the invention, the plurality of fixing bolts 110, blocking elements 109 and further bolts ensures an effective mechanical constraint between the first metallic plate 101 and the second metallic plate 102. In particular, the two opposite linear side protrusions 109b, when in position, matching the two opposite linear grooves of the second seats 112 avoid any movement and potential unscrewing of each fixing bolt 110 from the corresponding threaded hole 107a.

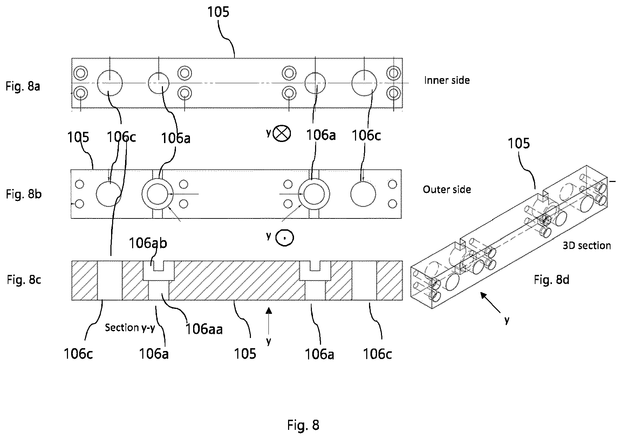

According to an aspect of the invention, and as better shown in figure 8, each seat 106a able to house a corresponding fixing bolt 110, has a lower cylinder-shaped section 106aa facing, in use, the first upper plane surface 101b, and an upper cylinder-shaped section 106ab in contact, in use, with the second lower plane surface 102a.

The section of the lower cylinder-shaped section 106aa of the seat 106a is smaller of the section of the upper cylinder-shaped section 106ab. In addition, the upper cylinder-shaped section 106ab has two side opposite grooves facing the grooves of the second seats 112 of the second metallic plate 102, both of said grooves being able to house the two opposite linear side protrusions 109b of the blocking element 109 during the assembly of the damping device 100.

Advantageously according to the invention, the profile of each fixing bolt 110 previously described matches the profile of each seat 106a, allowing a practical and effective screwing from the outside of said fixing bolts 110.

Advantageously according to the invention, the overall coupling of the seats 106a, second seats 112, fixing bolts 110 and blocking elements 109 implements an effective mechanical matching able to ensure the integrity and robustness of the damping device 100.

According to a preferred embodiment, shown in the figures, the fixing bolts 110 are four.

In use, during the reaction to an impacting load on the second upper plane surface 102b, the plurality of sealing shafts 108 and the plurality of the fixing bolts 110 are not subject to the normal component 'Fn' of the force 'F', to which, instead, opposes the plurality of springs 103.

The sealing shafts 108 and the fixing bolts 110, furthermore, have a length such as not to come into contact with the second metallic plate 102 even with the springs 103 subjected to their maximum deflection.

In this way, advantageously according to the invention, the sealing shafts 108 remains in position inside their seats 106c and the fixing bolts 110 remain constrained inside their seats 106a, by means of their respective threaded holes 107c and 107a.

In use, during a high energy impact on the second upper plane surface 102b, the minimum distance between the second metallic plate 102 and the first metallic plate 101 corresponds to the maximum deflection to which the springs 103 are subjected.

According to an aspect of the invention, the springs 103 are made of special steels, for example chromium-silicon alloy steel (Cr-Si).

According to an aspect of the invention, the springs 103 are characterized by an elastic constant between 263 N/mm and 275 N/mm, and preferably equal to 269 N/mm.

According to another aspect of the invention, the springs 103 are characterized by a rest length comprised between 62 mm and 66 mm, and preferably equal to 64 mm.

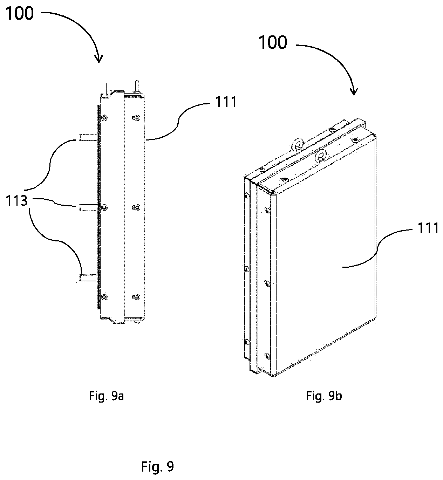

According to an aspect of the invention, the damping device 100 comprises along its external perimeter a metallic frame composed of two parts, with the first part placed along the external perimeter of the first metallic plate 101 and the second part, referable as a front cover 111 visible in figure 9, having rubberized profiles and placed along the external perimeter of the second metallic plate 102. The metal frame has anti-cut elements and laterally encloses the damping device 100 along its sides so as to avoid accidental contact of a user with the internal surfaces subject to compression.

Advantageously according to the invention, the damping device 100, not presenting sharp profiles along all its exposed surfaces, ensuring an optimal safety in all the operating situations where it is used.

According to an aspect of the invention, as previously said, the damping device 100 can be fixed to a vertical surface of a structure that is to be protected from high energy impacts.

In use, advantageously according to the invention, the damping device 100 includes tailor-made mechanical components, resulting highly customizable according to specific resistance needs.

A further advantage of the damping device 100 according to the invention is that it can be used in several sectors, as already said in logistics and specifically in loading points where heavy vehicles in reverse maneuver approach hydraulic platforms, with the result of avoiding the direct contact with the same platforms or with a concrete quay, creating a very efficient shock absorber and avoiding to damage the support structures, for example columns or walls, on which the damping device 100 is mounted.

A similar advantage is obtained in the construction sector, for example with the installation of the damping device 100 on walls or pillars of buildings in order to limit the effect of sudden impacts with maneuvering means, both on flat sections and on slight slopes, with this second case characterized by the presence of the shear stress 'Ft' acting along the vertical direction.

In use, the first lower plane surface 101a of the damping device 100 is fixed, for example on walls or pillars, by means of mechanical plugs 113 or chemical plugs or again, on metal structures, through perimetral welding.

According to another aspect of the invention, the damping device 100 can be used in the naval sector, specifically with vertical mounting on the walls of the holds and producing the first metallic plate 101 and the second metallic plate 102 by means of stainless steel, in order to protect said walls from sudden impacts, for example in the movement of motor vehicles in ferries, or of containers in cargo ships.

According to another aspect of the invention, the damping device 100 can be used in further applications in which said device, likewise in the holds of ships, is constrained to mobile supports such as sides of military vehicles or anti-riot vehicles, in the latter case realizing the first metallic plate 101 and the second metallic plate 102 by means of light and resistant alloys.

The damping device 100 can be also used in areas of heavy metal processing, such as foundries or dies.

Furthermore, the damping device 100 can be used as a bullet-proof protection, being able to limit the penetration of said bullet inside itself better than similar non-cushioned protective devices.

According to an alternative embodiment, not shown in the figures, the damping device 100 comprises at least one further reinforcement bar fixed to the first metallic plate 101 and arranged orthogonally with respect to the reinforcement bars 104c and 104d, and at least one further reinforcement bar fixed to the second metallic plate 102 and orthogonal to the reinforcement bars 104e and 104f, with a concomitant reduction of the dimensions of each of said bars to allow their mutual arrangement.

Another advantage of the damping device 100 according to the invention is that the plurality of springs 103 is interchangeable in terms of conformation and resistance specifications, so as to adapt to different uses and compression forces acting on the second upper plane surface 102b.

Therefore, the damping device 100 for high energy impacts according to the invention represents an effective and useful system for the protection, from sudden impacts with huge weights, of structures in environments used for logistics activities, where it constitutes a valid and safe bumper device, and in construction and other sectors characterized by the handling of heavy loads.

A further advantage of the damping device for high energy impacts according to the invention is that it is able to absorb the energy during impacts occurring on any of its angles, with different stress on each spring, returning to the original operating point during the release phase, i.e., at the end of the solicitation.

Another advantage of the damping device for high energy impacts according to the invention is that it is safe.

In addition, the damping device for high energy impacts according to the invention is easy to use.

Finally, the damping device for high energy impacts according to the invention is inexpensive.

It is finally clear that the damping device for high energy impacts, described and illustrated herein, can be subject to modifications and variations without departing from the protective scope of the present invention, as defined in the appended claims.

## Claims

1. Damping device (100) for high energy impacts, comprising:
- a first metallic plate (101) having a first lower plane surface (101a) able to be fixed to a structure to protect from high energy impacts, and a first upper plane surface (101b) comprising a plurality of threaded holes (107) ;
- a second metallic plate (102), overlapped to said first metallic plate (101), having a second lower plane surface (102a) and a second upper plane surface (102b);
- a plurality of springs (103) placed between the first metallic plate (101) and the second metallic plate (102);
- a plurality of reinforcement bars (104), placed between the first metallic plate (101) and the second metallic plate (102), extending along a part or along the overall length of said first metallic plate (101) and second metallic plate (102) and configured to oppose against shear stresses acting on the second upper plane surface (102b) of the second metallic plate (102), said plurality of reinforcement bars (104) consisting of at least a first reinforcement bar (104c) and a second reinforcement bar (104d) parallel to each other and fixed to the first upper plane surface (101b) of the first metallic plate (101), and of at least a third reinforcement bar (104e) and a fourth reinforcement bar (104f) parallel to each other and fixed to the second lower plane surface (102a) of the second metallic plate (102), the first reinforcement bar (104c) and the third reinforcement bar (104e) being partially in contact with each other in correspondence of respective side surfaces, the second reinforcement bar (104d) and the fourth reinforcement bar (104f) being partially in contact with each other at respective side surfaces;
**characterized in** comprising a plurality of auxiliary bars (105) parallel to each other and parallel to the third reinforcement bar (104e) and to the fourth reinforcement bar (104f), said auxiliary bars (105) being fixed to the second lower plane surface (102a) of the second metallic plate (102) and comprising over surfaces parallel to the second lower plane surface (102a) a plurality of first seats (106), in comprising a plurality of metallic cylinder-shaped support elements, each of said metallic cylinder-shaped support element being fastened at a threaded end by means of a threaded hole (107b) comprised in the plurality of threaded holes (107), and **in that** each spring comprised in the plurality of springs (103) has a spiral profile and is placed so as to enclose into its inner section a corresponding metallic cylinder-shaped support element.

2. Damping device (100) according to claim 1, **characterized in** comprising a plurality of cylinder-shaped sealing shafts (108), each of said cylinder-shaped sealing shafts (108) being fastened at a first threaded end to the first metallic plate (101) by means of a corresponding threaded hole (107c) comprised in the plurality of threaded holes (107) and being configured to be housed at a second opposite end into a corresponding seat (106c) comprised in the plurality of first seats (106).

3. Damping device (100) according to claim 1, **characterized in** comprising a plurality of fixing bolts (110), each of said fixing bolts (110) being fastened at a first threaded end to the first metallic plate (101) by means of a corresponding threaded hole (107a) comprised in the plurality of threaded holes (107), and being configured to be housed at a second opposite end into a corresponding seat (106a) comprised in the plurality of first seats (106) and to fix the first metallic plate (101) to the second metallic plate (102).

4. Damping device (100) according to claim 1, **characterized in** comprising a metallic frame composed of two parts, the first part being placed along the external perimeter of the first metallic plate (101) and the second part being placed along the external perimeter of the second metallic plate (102), said metallic frame having anti-cut elements and enclosing the damping device (100) along its sides.

5. Damping device (100) according to claim 3, **characterized in that** each fixing bolt (110) comprised in the plurality of fixing bolts (110) consists of a cylinder-shaped body (110b) having a first threaded end and of a hollow cylinder-shaped head (110a) having a section greater than the section of the cylinder-shaped body (110b), said hollow cylinder-shaped head (110a) comprising two grooves placed at opposite sides.

6. Damping device (100) according to claim 3, **characterized in that** the second metallic plate (102) comprises a plurality of second seats (112), each of said second seats (112) having two opposite linear grooves and being able to be placed in axis with a corresponding seat (106a) and to house a corresponding fixing bolt (110).

7. Damping device (100) according to claims 5 and 6, **characterized in that** each fixing bolt (110) comprised in the plurality of fixing bolts (110) is provided with a blocking element (109) consisting of a central element (109a) having a central hole and two opposite linear side protrusions (109b), said central element (109a) being able to be housed into the hollow cylinder-shaped head (110a) and said opposite linear protrusions (109b) being able to be housed extending along the grooves of the hollow cylinder-shaped head (110a) and into the linear grooves of a corresponding seat comprised in the plurality of second seats (112) .

## Patentansprüche

1. Dämpfungsvorrichtung (100) für energiereiche Stöße, umfassend:
eine erste Metallplatte (101), die eine erste untere ebene Oberfläche (101a), die an einer Konstruktion befestigt werden kann, um vor energiereichen Stößen zu schützen, und eine erste obere ebene Oberfläche (101b), die eine Vielzahl von Gewindebohrungen (107) umfasst, aufweist;
eine mit der ersten Metallplatte (101) überlappte zweite Metallplatte (102), die eine zweite untere ebene Oberfläche (102a) und eine zweite obere ebene Oberfläche (102b) aufweist;
eine Vielzahl von Federn (103), die zwischen der ersten Metallplatte (101) und der zweiten Metallplatte (102) angeordnet sind;
eine Vielzahl von Verstärkungsstäben (104), die zwischen der ersten Metallplatte (101) und der zweiten Metallplatte (102) angeordnet sind, sich entlang eines Teils oder entlang der Gesamtlänge der ersten Metallplatte (101) und zweiten Metallplatte (102) erstrecken und konfiguriert sind, um Scherspannungen, die auf die zweite obere ebene Oberfläche (102b) der zweiten Metallplatte (102) wirken, entgegenzuwirken, wobei die Vielzahl von Verstärkungsstäben (104) aus mindestens einem ersten Verstärkungsstab (104c) und einem zweiten Verstärkungsstab (104d), die parallel zueinander und an der ersten oberen ebenen Oberfläche (101b) der ersten Metallplatte (101) befestigt sind, und aus mindestens einem dritten Verstärkungsstab (104e) und einem vierten Verstärkungsstab (104f) besteht, die parallel zueinander und an der zweiten unteren ebenen Oberfläche (102a) der zweiten Metallplatte (102) befestigt sind, wobei der erste Verstärkungsstab (104c) und der dritte Verstärkungsstab (104e) in Übereinstimmung mit jeweiligen Seitenflächen teilweise in Kontakt miteinander sind, wobei der zweite Verstärkungsstab (104d) und der vierte Verstärkungsstab (104f) an jeweiligen Seitenflächen teilweise in Kontakt miteinander sind;
**dadurch gekennzeichnet, dass** sie eine Vielzahl von Hilfsstäben (105) umfasst, die parallel zueinander und parallel zu dem dritten Verstärkungsstab (104e) und zu dem vierten Verstärkungsstab (104f) sind, wobei die Hilfsstäbe (105) an der zweiten unteren ebenen Oberfläche (102a) der zweiten Metallplatte (102) befestigt sind und über Oberflächen, die parallel zu der zweiten unteren ebenen Oberfläche (102a) sind, eine Vielzahl von ersten Passungen (106) umfassen, umfassend eine Vielzahl von zylinderförmigen Metallstützelementen, wobei jedes der zylinderförmigen Metallstützelementen durch eine Gewindebohrung (107b), die von der Vielzahl von Gewindebohrungen (107) umfasst ist, an einem Gewindeende verschraubt ist, und dadurch, dass jede Feder, die von der Vielzahl von Federn (103) umfasst ist, ein Spiralprofil aufweist und so angeordnet ist, dass sie in ihren Innenabschnitt ein entsprechendes zylinderförmiges Metallstützelement umschließt.

2. Dämpfungsvorrichtung (100) nach Anspruch 1, **dadurch gekennzeichnet, dass** sie eine Vielzahl von zylinderförmigen Dichtwellen (108) umfasst, wobei jede der zylinderförmigen Dichtwellen (108) durch eine entsprechende Gewindebohrung (107c), die von der Vielzahl von Gewindebohrungen (107) umfasst ist, an einem ersten Gewindeende an der ersten Metallplatte (101) befestigt ist und konfiguriert ist, um an einem zweiten gegenüberliegenden Ende in einer entsprechenden Passung (106c) aufgenommen zu werden, die von der Vielzahl von ersten Passungen (106) umfasst ist.

3. Dämpfungsvorrichtung (100) nach Anspruch 1, **dadurch gekennzeichnet, dass** sie eine Vielzahl von Befestigungsschrauben (110) umfasst, wobei jede der Befestigungsschrauben (110) durch eine entsprechende Gewindebohrung (107a), die von der Vielzahl von Gewindebohrungen (107) umfasst ist, an einem ersten Gewindeende an der ersten Metallplatte (101) befestigt ist und konfiguriert ist, um an einem zweiten gegenüberliegenden Ende in einer entsprechenden Passung (106a) aufgenommen zu werden, die von der Vielzahl von ersten Passungen (106) umfasst ist, und die erste Metallplatte (101) an der zweiten Metallplatte (102) zu befestigen.

4. Dämpfungsvorrichtung (100) nach Anspruch 1, **dadurch gekennzeichnet, dass** sie einen Metallrahmen umfasst, der aus zwei Teilen zusammengesetzt ist, wobei der erste Teil entlang des Außenumfangs der ersten Metallplatte (101) angeordnet ist und der zweite Teil entlang des Außenumfangs der zweiten Metallplatte (102) angeordnet ist, wobei der Metallrahmen Antischnittelemente aufweist und die Dämpfungsvorrichtung (100) entlang ihrer Seiten umschließt.

5. Dämpfungsvorrichtung (100) nach Anspruch 3, **dadurch gekennzeichnet, dass** jede Befestigungsschraube (110), die von der Vielzahl von Befestigungsschrauben (110) umfasst ist, aus einem zylinderförmigen Körper (110b), der ein erstes Gewindeende aufweist, und aus einem hohlzylinderförmigen Kopf (110a), der einen Abschnitt aufweist, der größer als der Abschnitt des zylinderförmigen Körpers (110b) ist, besteht, wobei der hohlzylinderförmige Kopf (110a) zwei Nuten umfasst, die an gegenüberliegenden Seiten angeordnet sind.

6. Dämpfungsvorrichtung (100) nach Anspruch 3, **dadurch gekennzeichnet, dass** die zweite Metallplatte (102) eine Vielzahl von zweiten Passungen (112) umfasst, wobei jede der zweiten Passungen (112) zwei gegenüberliegende lineare Nuten aufweist und in Achse mit einer entsprechenden Passung (106a) angeordnet werden und eine entsprechende Befestigungsschraube (110) aufnehmen kann.

7. Dämpfungsvorrichtung (100) nach Ansprüchen 5 und 6, **dadurch gekennzeichnet, dass** jede Befestigungsschraube (110), die von der Vielzahl von Befestigungsschrauben (110) umfasst ist, mit einem Sperrelement (109) bereitgestellt ist, das aus einem Zentralelement (109a) besteht, das eine zentrale Bohrung und zwei gegenüberliegende lineare Seitenvorsprünge (109b) aufweist, wobei das Zentralelement (109a) in dem hohlzylinderförmigen Kopf (110a) aufgenommen werden kann und die gegenüberliegenden linearen Vorsprünge (109b) erstreckend entlang der Nuten des hohlzylinderförmigen Kopfes (110a) und in den linearen Nuten einer entsprechenden Passung, die von der Vielzahl von zweiten Passungen (112) umfasst ist, aufgenommen werden können.

## Revendications

1. Dispositif d'amortissement (100) pour impacts à haute énergie, comprenant :
- une première plaque métallique (101) présentant une première surface plane inférieure (101a) apte à être fixée à une structure à protéger des impacts à haute énergie, et une première surface plane supérieure (101b) comprenant une pluralité de trous filetés (107) ;
- une seconde plaque métallique (102), superposée à ladite première plaque métallique (101), présentant une seconde surface plane inférieure (102a) et une seconde surface plane supérieure (102b) ;
- une pluralité de ressorts (103) placés entre la première plaque métallique (101) et la seconde plaque métallique (102) ;
- une pluralité de barres de renfort (104), placées entre la première plaque métallique (101) et la seconde plaque métallique (102), se prolongeant le long d'une partie ou le long de la longueur totale de ladite première plaque métallique (101) et de ladite seconde plaque métallique (102) et configurées pour s'opposer aux contraintes de cisaillement agissant sur la seconde surface plane supérieure (102b) de la seconde plaque métallique (102), ladite pluralité de barres de renfort (104) étant constituée d'au moins une première barre de renfort (104c) et une seconde barre de renfort (104d) parallèles entre elles et fixées à la première surface plane supérieure (101b) de la première plaque métallique (101), et d'au moins une troisième barre de renfort (104e) et une quatrième barre de renfort (104f) parallèles entre elles et fixées à la seconde surface plane inférieure (102a) de la seconde plaque métallique (102), la première barre de renfort (104c) et la troisième barre de renfort (104e) étant partiellement en contact l'une avec l'autre en correspondance de leurs surfaces latérales respectives, la seconde barre de renfort (104d) et la quatrième barre de renfort (104f) étant partiellement en contact l'une avec l'autre au niveau de surfaces latérales respectives ;
**caractérisé en ce qu'**il comprend une pluralité de barres auxiliaires (105) parallèles entre elles et parallèles à la troisième barre de renfort (104e) et à la quatrième barre de renfort (104f), lesdites barres auxiliaires (105) étant fixées à la seconde surface plane inférieure (102a) de la seconde plaque métallique (102) et comprenant sur des surfaces parallèles à la seconde surface plane inférieure (102a) une pluralité de premiers sièges (106), **en ce qu'**il comprend une pluralité d'éléments de support métalliques cylindriques, chacun desdits éléments de support métalliques cylindriques étant fixé à une extrémité filetée au moyen d'un trou fileté (107b) compris dans la pluralité de trous filetés (107), et **en ce que** chaque ressort compris dans la pluralité de ressorts (103) a un profil en spirale et est placé de manière à enfermer dans sa section intérieure un élément de support métallique cylindrique correspondant.

2. Dispositif d'amortissement (100) selon la revendication 1, **caractérisé en ce qu'**il comprend une pluralité d'arbres d'étanchéité cylindriques (108), chacun desdits arbres d'étanchéité cylindriques (108) étant fixé au niveau d'une première extrémité filetée à la première plaque métallique (101) au moyen d'un trou fileté (107c) correspondant compris dans la pluralité de trous filetés (107) et étant configuré pour être logé au niveau d'une seconde extrémité opposée dans un siège (106c) correspondant compris dans la pluralité de premiers sièges (106).

3. Dispositif d'amortissement (100) selon la revendication 1, **caractérisé en ce qu'**il comprend une pluralité de boulons de fixation (110), chacun desdits boulons de fixation (110) étant fixé au niveau d'une première extrémité filetée à la première plaque métallique (101) au moyen d'un trou fileté (107a) correspondant compris dans la pluralité de trous filetés (107), et étant configuré pour être logé au niveau d'une seconde extrémité opposée dans un siège (106a) correspondant compris dans la pluralité de premiers sièges (106) et pour fixer la première plaque métallique (101) à la seconde plaque métallique (102) .

4. Dispositif d'amortissement (100) selon la revendication 1, **caractérisé en ce qu'**il comprend un cadre métallique composé de deux parties, la première partie étant placée le long du périmètre extérieur de la première plaque métallique (101) et la seconde partie étant placée le long du périmètre extérieur de la seconde plaque métallique (102), ledit cadre métallique comportant des éléments anti-coupure et enfermant le dispositif d'amortissement (100) le long de ses côtés.

5. Dispositif d'amortissement (100) selon la revendication 3, **caractérisé en ce que** chaque boulon de fixation (110) compris dans la pluralité de boulons de fixation (110) est constitué d'un corps cylindrique (110b) présentant une première extrémité filetée et d'une tête cylindrique creuse (110a) présentant une section supérieure à la section du corps cylindrique (110b), ladite tête cylindrique creuse (110a) comportant deux rainures placées sur des côtés opposés.

6. Dispositif d'amortissement (100) selon la revendication 3, **caractérisé en ce que** la seconde plaque métallique (102) comporte une pluralité de deuxièmes sièges (112), chacun desdits deuxièmes sièges (112) présentant deux rainures linéaires opposées et étant apte à être placé en axe avec un siège correspondant (106a) et à loger un boulon de fixation (110) correspondant.

7. Dispositif d'amortissement (100) selon les revendications 5 et 6, **caractérisé en ce que** chaque boulon de fixation (110) compris dans la pluralité de boulons de fixation (110) est pourvu d'un élément de blocage (109) constitué d'un élément central (109a) présentant un trou central et deux saillies latérales linéaires opposées (109b), ledit élément central (109a) pouvant être logé dans la tête cylindrique creuse (110a) et lesdites saillies linéaires opposées (109b) pouvant être logées en se prolongeant le long des rainures de la tête cylindrique creuse (110a) et dans les rainures linéaires d'un siège correspondant compris dans la pluralité de deuxièmes sièges (112).
